# EUROPÄISCHE PATENTSCHRIFT

(11) **EP 2 754 504 B1**
(45) Veröffentlichungstag und Bekanntmachung des Hinweises auf die Patenterteilung: **21.02.2018**
(21) Anmeldenummer: 13198491.6
(22) Anmeldetag: 19.12.2013
(51) Int. Cl.: B05D 5/08, B05D 7/14, B05D 1/00, C09K 3/18, E01H 4/02, B05D 3/14, B05D 1/28, C08F 14/18, C09D 5/00

(54) **Hydrophobiertes Kraftfahrzeugbauteil für Pistenpflegefahrzeuge und Pistenpflegefahrzeug mit einem hydrophobierten Kraftfahrzeugbauteil**
Hydrophobic component of a motor vehicle for track maintenance vehicles and track maintenance vehicles with a hydrophobic motor vehicle component
Composant de véhicule automobile hydrophobe pour véhicules d'entretien des pistes et véhicule d'entretien des pistes doté d'un composant de véhicule automobile hydrophobe

(30) Priorität: 10.01.2013 DE 102013200272
(43) Veröffentlichungstag der Anmeldung: 16.07.2014
(73) Patentinhaber: Kässbohrer Geländefahrzeug AG, 88471 Laupheim (DE)
(72) Erfinder: Nusser, Martin, 89231 Neu-Ulm (DE)
(74) Vertreter: Patentanwälte Ruff, Wilhelm, Beier, Dauster & Partner mbB

(56) Entgegenhaltungen:
- WO-A2-2004/078873
- DE-A1-102005 034 764
- FR-A1- 2 792 003
- US-A- 3 221 830

## Beschreibung

### Anwendungsgebiet und Stand der Technik

Die Erfindung betrifft ein hydrophobiertes Kraftfahrzeugbauteil, Verfahren zur Herstellung eines derartigen Bauteils sowie ein Pistenpflegefahrzeug, welches wenigstens ein hydrophobiertes Kraftfahrzeugbauteil umfasst.

In der EP 0 825 241 B1 wird eine wasserabweisende, insbesondere schnee- und eisabweisende, Zusammensetzung zur Beschichtung u.a. von Fahrzeugen wie beispielsweise Elektroautos, Zügen und Automobilen vorgeschlagen.

Die aus der EP 0 825 241 B1 bekannte Beschichtungszusammensetzung enthält mehrere Bestandteile und ist daher vergleichsweise aufwendig in der Herstellung sowie der Handhabung. Obendrein ist eine Erprobung der Zusammensetzung im Zusammenhang von Fahrzeugen, die extremen Witterungsbedingungen ausgesetzt sind, nicht beschrieben.

Die Beschichtung von Fahrzeugen mit wasserabweisenden Beschichtungen ist auch aus der FR 2 792 003 bereits bekannt.

Lediglich das Dokument US 3 221 830 A beschreibt die Verwendung von Fluoropolymeren als Eisschutz für Schneemobile.

Demgegenüber besteht jedoch gerade bei Kraftfahrzeugen, welche extremen Kälte- und Schneeeinflüssen ausgesetzt sind, ein erhöhtes Bedürfnis nach Beschichtungen mit Antieis- und Antischneeeigenschaften.

### Aufgabe und Lösung

Der vorliegenden Erfindung lag daher die Aufgabe zugrunde, technische Lösungen bereitzustellen, welche dieses Bedürfnis adressieren.
Diese Aufgabe wird gemäß einem ersten Aspekt der Erfindung gelöst durch ein Kraftfahrzeugbauteil mit den Merkmalen des unabhängigen Anspruchs 1. Bevorzugte Ausführungsformen des Kraftfahrzeugbauteils sind in den abhängigen Ansprüchen 2 bis 7 definiert. Weiterhin wird die der Erfindung zugrunde liegende Aufgabe gelöst durch ein Pistenpflegefahrzeug mit den Merkmalen des Anspruchs 8. Der Wortlaut sämtlicher Ansprüche wird hiermit durch ausdrückliche Bezugnahme zum Inhalt der vorliegenden Beschreibung gemacht.
In einem ersten Aspekt wird die der Erfindung zugrundeliegende Aufgabe durch ein hydrophobiertes Kraftfahrzeugbauteil für ein Pistenpflegefahrzeug, vorzugsweise eine Pistenraupe, gelöst.
Das Kraftfahrzeugbauteil umfasst einen Kraftfahrzeugbauteilkörper und wenigstens eine hydrophobe Schicht, welche die Oberfläche des Kraftfahrzeugbauteilkörpers beschichtet.

Die wenigstens eine hydrophobe Schicht kann die Kraftfahrzeugbauteilkörperoberfläche teilweise oder vollständig, d.h. vollflächig bzw. durchgehend, beschichten.

Gegenüber gattungsgemäßen Kraftfahrzeugbauteilen zeichnet sich das erfindungsgemäße Kraftfahrzeugbauteil besonders dadurch aus, dass die wenigstens eine hydrophobe Schicht mittels eines Gasphasenabscheidungsverfahrens, vorzugsweise chemischen Gasphasenabscheidungsverfahrens, erzeugt ist.

Die Oberflächenenergie ist ein Maß für die an einer Oberfläche wirksamen molekularen Kräfte. Je höher die Oberflächenenergie eines Materials, desto stärker ist die Wechselwirkung mit der Umgebung. Materialien mit hoher Oberflächenenergie werden stark von Wasser benetzt, das Wasser verläuft, es herrscht eine starke Anziehungskraft zwischen Oberfläche und Wasser. Materialien mit niedriger Oberflächenenergie werden dagegen nur schlecht von Wasser benetzt, das Wasser bildet hier aufgrund der geringen Anziehungskräfte zur Oberfläche einzelne Tropfen. Die Oberflächenenergie kann in einen polaren und in einen dispersen Anteil aufgeteilt werden. Der polare Anteil beinhaltet sämtliche Wechselwirkungen, welche aufgrund von unsymmetrischen Ladungsverteilungen innerhalb der oberflächennahen Moleküle zustande kommen (polare Gruppen wie beispielsweise sauerstoffhaltige Verbindungen), wohingegen der disperse Anteil die restlichen Wechselwirkungen beinhaltet.

Unter dem Ausdruck "hydrophobiertes Kraftfahrzeugbauteil" soll im Sinne der vorliegenden Erfindung ein behandeltes Kraftfahrzeugbauteil verstanden werden, dessen Oberflächenenergie als Folge der Behandlung erniedrigt ist.

Unter dem Ausdruck "hydrophobe Schicht" soll im Rahmen der vorliegenden Erfindung eine Schicht verstanden werden, die die Oberflächenenergie des Kraftfahrzeugbauteilkörpers erniedrigt, so dass eine Anhaftung von Wasser, insbesondere in Form von Schnee und/oder Eis, auf der Oberfläche des Kraftfahrzeugbauteilkörpers erschwert oder gar unmöglich ist.

Der Ausdruck "wenigstens eine hydrophobe Schicht" bedeutet im Sinne der vorliegenden Erfindung eine hydrophobe Schicht oder eine Vielzahl von hydrophoben Schichten, d.h. zwei oder mehr hydrophobe Schichten.

In einer bevorzugten Ausführungsform handelt es sich bei der wenigstens einen hydrophoben Schicht um wenigstens eine hydrophobe fluorhaltige Schicht. Der Ausdruck "wenigstens eine hydrophobe fluorhaltige Schicht" soll dabei in gleicher Weise verstanden werden, wie die im vorangegangenen Absatz definierte "wenigstens eine hydrophobe Schicht".

Die wenigstens eine hydrophobe Schicht enthält in einer bevorzugten Ausführungsform ein hydrophobes Polymer oder besteht aus einem solchen Polymer.

Bevorzugt handelt es sich bei dem Polymer um ein fluorhaltiges, insbesondere partiell fluoriertes oder perfluoriertes, Polymer.

Bei dem Polymer kann es sich des Weiteren um ein anorganisches oder organisches Polymer handeln, wobei ein organisches Polymer bevorzugt ist.

Grundsätzlich kann es sich bei dem Polymer um ein partiell fluoriertes organisches, d.h. um ein aus den Elementen Kohlenstoff, Wasserstoff und Fluor zusammengesetztes, Polymer oder um ein perfluoriertes organisches, d.h. um ein aus den Elementen Kohlenstoff und Fluor zusammengesetztes, Polymer, ein sogenanntes Kohlenstoff-Fluor-Polymer, handeln.
Im Hinblick auf die Erzielung einer besonders stark reduzierten Oberflächenenergie des Kraftfahrzeugbauteilkörpers ist es erfindungsgemäß jedoch bevorzugt, wenn es sich bei dem Polymer um ein perfluoriertes organisches Polymer, d.h. ein Kohlenstoff-Fluor-Polymer, handelt.
Das Polymer weist in einer weiteren Ausführungsform kovalente, d.h. auf kovalente Bindungen beruhende, Quervernetzungen auf.
Die Quervernetzungen treten innerhalb des Polymers bevorzugt statistisch auf.
Vorzugsweise bildet das Polymer aufgrund der Quervernetzungen ein dreidimensionales Netzwerk, insbesondere nach Art eines stark vernetzten Duroplasten. Erfindungsgemäß ist die wenigstens eine hydrophobe Schicht mittels einer plasmaunterstützten, d.h. mittels einer durch ein Plasma aktivierten, chemischen Gasphasenabscheidung erzeugt. Unter einem Plasma wird allgemein ein nach außen elektrisch neutrales Gas verstanden, in welchem durch verschiedene Arten der Anregung unterschiedlich elektronisch angeregte neutrale Teilchen, Radikale, Ionen und Elektronen vorhanden sind, die auf einem dem Plasma ausgesetzten Substrat (vorliegend dem Kraftfahrzeugbauteilkörper) in Form chemischer Substanzen abgeschieden werden.
Vorzugsweise ist die wenigstens eine hydrophobe Schicht mittels eines Niederdruck-Plasmas erzeugt. Unter dem Ausdruck "Niederdruck-Plasma" soll im Sinne der vorliegenden Erfindung ein Plasma verstanden werden, in dem der Druck (erheblich) niedriger ist als der Erdatmosphärendruck.

In einer besonders bevorzugten Ausführungsform ist die wenigstens eine Schicht, vorzugsweise mittels Plasmapolymerisation, ausgehend von einem fluorhaltige Vorläufermoleküle, vorzugsweise fluorhaltige Monomere, enthaltenden Reaktivgas erzeugt.

Durch Aktivierung mittels eines Plasmas entstehen ionisierte Moleküle bzw. Monomere, wobei sich bereits in der Gasphase erste Molekül- bzw. Monomerfragmente in Form von Clustern oder Ketten bilden können. Eine anschließende Kondensation dieser Fragmente auf der Substratoberfläche, vorliegend auf der Kraftfahrzeugbauteilkörperoberfläche, bewirkt dann insbesondere unter Einwirkung von Substrattemperatur, Elektronen- und Ionenbeschuss eine Polymerisation unter Ausbildung einer vorzugsweise geschlossenen Polymerschicht.

In anderen Worten handelt es sich bei dem in den vorangegangenen Absätzen beschriebenen Polymer vorzugsweise um ein Plasmapolymer.

Bei den oben erwähnten fluorhaltigen Monomeren kann es sich gemäß einer weitergehenden Ausführungsform um partiell fluorierte Monomere und/oder perfluorierte Monomere handeln, wobei die Verwendung perfluorierter Monomere besonders bevorzugt ist.

Die fluorhaltigen Monomere können aus der Gruppe umfassend Fluorethan, 1,1-Difluorethan, 1,1,1-Trifluorethan, 1,1,1,2,-Tetrafluorethan, Pentafluorethan, Hexafluorethan, Octafluorpropan, Decafluorbutan, Tetrafluorethen (Tetrafluorethylen), Perfluorcyclopropan, Perfluorcyclobutan, Perfluorcyclopentan und Mischungen davon ausgewählt sein. Hexafluorethan und/oder Tetrafluorethen sind besonders bevorzugt.

Bezüglich weiterer Merkmale und Vorteile zur Erzeugung der wenigstens einen hydrophoben Schicht wird vollständig auf die im Rahmen des zweiten Erfindungsaspektes gemachten Ausführungen Bezug genommen.

Die wenigstens eine hydrophobe Schicht beschichtet in einer weiteren Ausführungsform eine aufgeraute und/oder Mikroporen aufweisende Oberfläche des Kraftfahrzeugbauteilkörpers. Eine derartige Oberfläche lässt sich zum Beispiel mittels einer aktivierenden Vorbehandlung des Kraftfahrzeugbauteilkörpers (vor der vorzugsweise chemischen Gasphasenabscheidung) realisieren, beispielsweise mittels Aufflammen, Korona-Behandlung oder eines Niederdruck-Plasmaverfahrens. Durch eine aktivierende Vorbehandlung lässt sich mit besonderem Vorteil die Oberflächenenergie des Kraftfahrzeugbauteilkörpers erhöhen, wodurch die wenigstens eine hydrophobe Schicht stärker an die Oberfläche des Kraftfahrzeugbauteilkörpers binden kann.

Zur Herstellung des Kraftfahrzeugbauteilkörpers kommen grundsätzlich die zur Fertigung von Kraftfahrzeugbauteilen üblicherweise verwendeten Materialien in Betracht. Bevorzugt ist der Kraftfahrzeugbauteilkörper jedoch aus einem Material hergestellt bzw. gebildet, welches ausgewählt ist aus der Gruppe umfassend Polyester (PES), insbesondere Polyethylenterephthalat (PET), Polyvinylchlorid (PVC), insbesondere Weich-PVC, Polycarbonate (PC), Polyurethane (PUR), Polymethylmethacrylat, Polypropylen, glasfaserverstärkte Kunststoffe, Polyesterharze, Epoxydharze, Metalle, mittels kathodischer Tauchlackierung beschichtete Bleche (KT-Bleche), epoxydharzbeschichtete Metalle bzw. Bleche und Kombinationen davon.

Bei dem Kraftfahrzeugbauteilkörper handelt es sich um ein Karosserieteil, insbesondere Verkleidungsteil, eines Pistenpflegefahrzeuges, vorzugsweise einer Pistenraupe.
Insbesondere kann es sich bei dem Kraftfahrzeugbauteilkörper um ein Karosserie- bzw. Verkleidungsteil einer Personenkabine eines Pistenpflegefahrzeuges, vorzugsweise einer Pistenraupe, handeln. Besonders bevorzugt ist das oben genannte Karosserie- bzw. Verkleidungsteil ausgewählt aus der Gruppe umfassend Frontmaske (Bauteil unterhalb der Windschutzscheibe eines Pistenpflegefahrzeuges), Schneefräsenabdeckung, Überwurfschutz, Finisher und Fensterscheibe.

Ein zweiter Aspekt betrifft ein Verfahren zur Herstellung eines hydrophobierten Kraftfahrzeugbauteils für ein Pistenpflegefahrzeug, bei welchem die Oberfläche eines Kraftfahrzeugbauteilkörpers mittels Gasphasenabscheidung, vorzugsweise chemischer Gasphasenabscheidung, mit wenigstens einer hydrophoben Schicht, vorzugsweise wenigstens einer hydrophoben Polymerschicht, beschichtet wird.
Die Beschichtung des Kraftfahrzeugbauteilkörpers wird in der Regel in einer hierfür geeigneten Prozesskammer durchgeführt.
Die Beschichtung des Kraftfahrzeugbauteilkörpers kann weiterhin derart vorgenommen werden, dass die Oberfläche des Kraftfahrzeugbauteilkörpers nur teilweise oder vollständig, d.h. vollflächig bzw. durchgehend, mit der wenigstens einen hydrophoben Schicht beschichtet wird. Bevorzugt erfolgt die Beschichtung mittels einer plasmaunterstützten Gasphasenabscheidung.

Besonders bevorzugt erfolgt die Beschichtung des Kraftfahrzeugbauteilkörpers mittels eines Niederdruck-Plasmaverfahrens, bei welchem mittels einer Hochfrequenzentladung zwischen wenigstens zwei Elektroden aus einem fluorhaltige Monomere enthaltenden Reaktivgas ein Plasma erzeugt wird und wenigstens eine fluorhaltige Schicht, vorzugsweise eine fluorhaltige Polymerschicht, auf der Oberfläche des Kraftfahrzeugbauteilkörpers abgeschieden wird.

Der Kraftfahrzeugbauteilkörper kann dabei auf einer geerdeten Elektrode oder auf einer mit einer Hochfrequenz gespeisten Elektrode liegen.

Die Beschichtung des Kraftfahrzeugbauteilkörpers kann in einer weiteren Ausführungsform in einem Druckbereich von 0.05 mbar bis 1 mbar, bevorzugt 0.06 mbar bis 0.08 mbar, erfolgen.

Bevorzugt wird mittels einer Hochfrequenzentladung mit einer Leistung von 100 W bis 10 kW, bevorzugt 1 kW bis 1.5 kW, gearbeitet.

Die Beschichtung kann weiterhin innerhalb eines Zeitraumes von 1 min bis 30 min, bevorzugt 10 min bis 15 min, durchgeführt werden.

Zur Verbesserung der Anhaftung der wenigstens einen hydrophoben Schicht an die Oberfläche des Kraftfahrzeugbauteilkörpers ist es in vorteilhaften Ausführungsformen vorgesehen, dass der Kraftfahrzeugbauteilkörper vor der Beschichtung vorbehandelt, d.h. gereinigt und/oder dessen Oberfläche (chemisch) aktiviert, wird. Eine aktivierende Vorbehandlung kann beispielsweise mittels Aufflammen, Korona-Behandlung oder mittels eines Plasmas, insbesondere Niederdruck-Plasmas, erfolgen.

Bevorzugt ist eine Vorbehandlung des Kraftfahrzeugbauteilkörpers mit einem Plasma, insbesondere in einem Druckbereich von 0.05 mbar bis 1 mbar, bevorzugt 0.06 mbar bis 0.08 mbar.
Das zur Vorbehandlung des Kraftfahrzeugbauteilkörpers vorgesehene Plasma kann ein Plasma aus einem Edelgas wie beispielsweise Argon, Tetrafluormethan, Wasserstoff oder Mischungen davon sein.
Die Vorbehandlung kann während eines Zeitraumes von 1 min bis 30 min, bevorzugt 10 min bis 15 min, vorgenommen werden.
Bezüglich weiterer Merkmale und Vorteile des Verfahrens, insbesondere der wenigstens einen hydrophoben Schicht und/oder des Kraftfahrzeugbauteilkörpers, wird vollständig auf die im Rahmen des ersten Erfindungsaspektes gemachten Ausführungen Bezug genommen. Ein alternatives, nicht erfindungsgemäßes Kraftfahrzeugbauteil umfasst einen Kraftfahrzeugbauteilkörper und wenigstens eine hydrophobe Silanschicht, welche die Oberfläche des Kraftfahrzeugbauteilkörpers beschichtet.
Die wenigstens eine hydrophobe Silanschicht kann die Oberfläche des Kraftfahrzeugbauteilkörpers teilweise oder vollständig, d.h. vollflächig bzw. durchgehend, beschichten.
Bevorzugt ist die wenigstens eine Silanschicht adsorptiv über physikalische Wechselwirkungen an die Oberfläche des Kraftfahrzeugbauteilkörpers gebunden (Physisorption).

Unter dem Ausdruck "hydrophobe Silanschicht" soll eine Silanschicht verstanden werden, die die Oberflächenenergie des Kraftfahrzeugbauteilkörpers erniedrigt, so dass eine Anhaftung von Wasser, insbesondere in Form von Schnee und/oder Eis, auf der Oberfläche des Kraftfahrzeugbauteilkörpers erschwert oder gar unmöglich ist.

Der Ausdruck "wenigstens eine hydrophobe Silanschicht" bedeutet eine hydrophobe Silanschicht oder eine Vielzahl von hydrophoben Silanschichten, d.h. zwei oder mehr hydrophobe Silanschichten.

In einer Ausführungsform enthält die wenigstens eine hydrophobe Silanschicht ein hydrophobes Silan (oder gegebenenfalls eine Mischung hydrophober Silane) oder besteht aus einem solchen Silan (oder gegebenenfalls einer solchen Silanmischung).
Bei dem Silan selbst handelt es sich vorzugsweise um ein funktionalisiertes Silan. Insoweit kommen grundsätzlich alle Silane in Betracht, welche aufgrund ihrer Funktionalisierung hydrophob bzw. in der Lage sind, die Oberflächenenergie des Kraftfahrzeugbauteilkörpers zu erniedrigen.
Bevorzugt handelt es sich bei dem Silan um ein fluorhaltiges, insbesondere partiell fluoriertes oder perfluoriertes, Silan.
Besonders bevorzugt ist das Silan ausgewählt aus der Gruppe umfassend Fluoralkylsilane, Fluoralkylalkoxysilane und Mischungen davon. Beispielsweise kann das Silan ausgewählt sein aus der Gruppe umfassend Tridecafluor-1,1,2,2-tetrahydrooctyltrichlorsilan, Tridecafluor-1,1,2,2-tetrahydrooctyltrimethoxysilan, Tridecafluor-1,1,2,2-tetrahydro-octyltriethoxysilan, Heptadecafluor-1,1,2,2-tetrahydrodecyltrichlorsilan, Heptadecafluor-1,1,2,2-tetrahydrodecyltriethoxysilan, Heptadecafluor-1,1,2,2-tetrahydrodecyltrimethoxysilan, C₁₀F₂₁C₂H₄SiCl₃, C₁₀F₂₁C₂H₄Si(OCH₃)₃, C₁₀F₂₁C₂H₄Si(OC₂H₅)₃, C₁₂F₂₅C₂H₄SiCl₃, C₁₂F₂₅C₂H₄Si(OCH₃)₃, C₁₂F₂₅C₂H₄Si(OC₂H₅)₃ und Mischungen davon.

In einer weiteren Ausführungsform handelt es sich bei dem Silan um ein Silanöl.

Die wenigstens eine hydrophobe Silanschicht kann in einer weiteren Ausführungsform, insbesondere wenn das Silan als Silanöl vorliegt, neben dem Silan weitere Bestandteile wie beispielsweise organische Lösungsmittel, insbesondere ausgewählt aus der Gruppe umfassend Methanol, Ethanol, Propanol, Isopropanol, Aceton, 3-Pentanon, Ethylacetat und Mischungen davon, enthalten.

Besonders bevorzugt handelt es sich bei dem Silan um das unter der Bezeichnung Dynasilan Sivo Clear EC kommerziell erhältliche Silan der Firma Evonik.

Die wenigstens eine hydrophobe Silanschicht ist vorzugsweise in Form eines Filmes auf der Oberfläche des Kraftfahrzeugbauteilkörpers ausgebildet.

Die wenigstens eine hydrophobe Silanschicht beschichtet in einer weiteren Ausführungsform eine aufgeraute und/oder Mikroporen aufweisende Oberfläche des Kraftfahrzeugbauteilkörpers. Eine derartige Oberfläche lässt sich zum Beispiel mittels einer aktivierenden Vorbehandlung des Kraftfahrzeugbauteilkörpers realisieren, beispielsweise mittels Aufflammen, Korona-Behandlung oder eines Niederdruck-Plasmaverfahrens. Durch eine aktivierende Vorbehandlung lässt sich mit besonderem Vorteil die Oberflächenenergie des Kraftfahrzeugbauteilkörpers erhöhen, wodurch die wenigstens eine hydrophobe Silanschicht stärker an die Oberfläche des Kraftfahrzeugbauteilkörpers binden kann.

Ein weiterer Aspekt betrifft ein Verfahren zur Herstellung eines hydrophobierten Kraftfahrzeugbauteils für ein Pistenpflegefahrzeug, bei welchem die Oberfläche eines Kraftfahrzeugbauteilkörpers mit wenigstens einer hydrophoben Silanschicht beschichtet wird.
Die Beschichtung des Kraftfahrzeugbauteilkörpers kann derart vorgenommen werden, dass die Oberfläche des Kraftfahrzeugbauteilkörpers nur teilweise oder vollständig, d.h. vollflächig bzw. durchgehend, mit der wenigstens einen hydrophoben Silanschicht beschichtet wird.
Die Beschichtung erfolgt vorzugsweise mittels Einpolieren des Silans auf oder in die Oberfläche des Kraftfahrzeugbauteilkörpers.
Die Beschichtung kann mit besonderem Vorteil bei einer Umgebungstemperatur von 15 °C bis 25 °C vorgenommen werden.
Ein weiterer Vorteil besteht darin, dass die Beschichtung innerhalb eines vergleichsweise kurzen Zeitraumes, beispielsweise innerhalb eines Zeitraumes von 30 Sekunden bis 300 Sekunden, insbesondere 30 Sekunden bis 180 Sekunden, bevorzugt 30 Sekunden bis 60 Sekunden, vorgenommen werden kann.

Um die Anhaftung der wenigstens einen hydrophoben Silanschicht auf der Oberfläche des Kraftfahrzeugbauteilkörpers zu verbessern, kann es erfindungsgemäß weiterhin von Vorteil sein, die Oberfläche des Bauteilkörpers zunächst vorzubehandeln, insbesondere zu reinigen, beispielsweise unter Verwendung von Isopropanol.
Ein hydrophober Effekt stellt sich mit besonderem Vorteil bereits nach wenigen Minuten ein. Bei Bedarf kann die Beschichtung wiederholt werden.

In einem weiteren Aspekt betrifft die Erfindung ein Pistenpflegefahrzeug, vorzugsweise eine Pistenraupe, umfassend wenigstens ein hydrophobiertes Kraftfahrzeugbauteil gemäß der vorliegenden Erfindung.
Zur Entfernung von Eis- und Schneeresten von einem erfindungsgemäßen Pistenpflegefahrzeug und insbesondere von dessen Anbauaggregaten wie einer Schneefräse kann es von Vorteil sein, wenn das Fahrzeug einen hierfür vorgesehenen Mechanismus aufweist, welcher unter Nutzung von Aktoren des Fahrzeugs eine Rüttelfunktion bereitstellt. Ein solcher Mechanismus nutzt entweder bereits bestehende Aktoren, wie beispielsweise jene Aktoren, die zum Anheben und Senken der Schneefräse vorgesehen sind, oder ist durch zusätzliche Aktoren realisiert, die einzig der Rüttelfunktion dienen. Die genannten Aktoren können insbesondere über das Hydrauliksystem des Fahrzeugs mit einem festgelegten Programm gesteuert werden, durch welches die Rüttelbewegung erzeugt wird. Das genannte Programm muss dabei nicht vom Fahrzeugführer durch beispielsweise wechselnde Betätigungen manuell realisiert werden, sondern ist durch einen Steuerrechner des Fahrzeugs realisiert. Es reicht, wenn der Fahrzeugführer dieses Programm beispielsweise durch eine hierfür vorgesehene Taste aufruft. Das Programm bewirkt an einem oder mehreren hierfür vorgesehenen Aktoren eine Bewegung mit wechselnden Richtungen, durch die beispielsweise ein Anbauaggregat, insbesondere die Schneefräse, im Wechsel in entgegengesetzte Richtungen bewegt wird. Hierbei können sowohl vergleichsweise hochfrequente Bewegungen bewirkt werden (> 2 Hz) als auch bevorzugterweise niederfrequente Bewegungen (< 2 Hz). Insbesondere durch ein ruckhaftes Abbremsen des jeweiligen Aktors und damit des jeweiligen Anbauaggregats bei der Richtungsumkehr kann Schnee und Eis insbesondere von erfindungsgemäß präparierten Oberflächen des Pistenpflegefahrzeugs zuverlässig entfernt werden.
Bezüglich weiterer Merkmale und Vorteile des Pistenpflegefahrzeuges, insbesondere des hydrophobierten Kraftfahrzeugbauteils, wird vollständig auf die bisherige Beschreibung Bezug genommen. Ein weiterer Aspekt betrifft die Verwendung der Gasphasenabscheidung, vorzugsweise chemischen Gasphasenabscheidung, insbesondere plasmaunterstützten chemischen Gasphasenabscheidung, bzw. die Verwendung eines mittels Gasphasenabscheidung, vorzugsweise chemischer Gasphasenabscheidung, insbesondere plasmaunterstützter chemischer Gasphasenabscheidung, erzeugten Polymers zur Herstellung eines hydrophobierten Kraftfahrzeugbauteils für ein Pistenpflegefahrzeug.
Zur Vermeidung von Wiederholungen wird an dieser Stelle bezüglich weiterer Merkmale und Vorteile der Gasphasenabscheidung bzw. des hierdurch erzeugten Polymers vollständig auf die im Rahmen des ersten und zweiten Erfindungsaspektes gemachten Ausführungen Bezug genommen.

Weitere Merkmale und Vorteile der Erfindung ergeben sich aus der nachfolgenden Beschreibung von bevorzugten Ausführungsformen in Form von Ausführungsbeispielen. Dabei können einzelne Merkmale jeweils für sich alleine oder in Kombination miteinander verwirklicht sein. Die beschriebenen Ausführungsformen dienen dabei lediglich der weiteren Erläuterung der Erfindung, ohne diese herauf zu beschränken.

### Beispielteil

### 1. Probe-Muster

Die folgenden Muster-Bauteilkörper eines Pistenpflegefahrzeuges (Pistenraupe) wurden verwendet:
1.1 rote, aus Polyester (PES) bestehende Fräsenabdeckungen (nachfolgend als Abdeckung-PES bezeichnet),
1.2 transparenter, aus Weich-Polyvinylchlorid (Weich-PVC) bestehender Überwurfschutz (nachfolgend als Weich-PVC bezeichnet),
1.3 mittels kathodischer Tauchlackierung mit Epoxydharz beschichtete Bleche (nachfolgend als Blech-KTL bezeichnet) und
1.4 transparent und aus Polycarbonat (PC) bestehende Fräsenabdeckungen (nachfolgend als Abdeckung-PC bezeichnet).

Die obigen Muster wurden hinsichtlich ihrer Oberflächenenergie sowie der chemischen Natur der Oberflächen charakterisiert. Eine infrarotspektroskopische Untersuchung bestätigte dabei bei sämtlichen Mustern die im Datenblatt angegebenen Materialinformationen. Es wurden insbesondere keine Hinweise auf hydrophobierende Oberflächenbehandlungen gefunden. Die Oberflächenenergien der Proben-Muster im Anlieferungszustand sind in unten stehender Tabelle 1 wiedergegeben.

**Tabelle 1: Oberflächenenergien der Probe-Muster**

| **Muster** | **Oberflächenenergie unbehandelt [mN/m]** | | |
|---|---|---|---|
| | **polar** | **dispers** | **gesamt** |
| Abdeckung-PES | 5,2 | 30,9 | 36,1 |
| Weich-PVC | 0,5 | 38,2 | 38,8 |
| Blech-KTL | 5,3 | 25,0 | 30,3 |
| Abdeckung-PC | 0,7 | 39,7 | 40,4 |

### 2. Oberflächenaktivierung

Zur Durchführung der chemischen Gasphasenabscheidung wurden die unter 1. genannten Proben-Muster einer Oberflächenaktivierung (Erhöhung der Oberflächenenergie) mittels eines Niederdruck-Plasmas vorgenommen. Bei verringertem Druck wurde bei Atmosphärenluft ein Plasma angelegt. Im Plasma erzeugte Elektronen und Ionen führten zum Aufbrechen von Bindungen in oberflächennahen Schichten der Probe-Muster. Die energiereichen Bindungen reagierten wiederum mit Molekülen aus der Umgebungsluft, was zu einer Vielzahl von sauerstoffhaltigen Gruppen an der Oberfläche führte. Die hierbei entstandenen stark polaren Gruppen erhöhten die Oberflächenenergie der Probe-Muster um ein Vielfaches.

Die durch die Niederdruck-Plasmaaktivierung erhaltenen Oberflächenenergien bei einer Behandlungsdauer von 180 Sekunden sind in untenstehender Tabelle 2 aufgeführt. Vor der Plasmaaktivierung wurden sämtliche Probe-Muster mit Isopropanol gereinigt.

**Tabelle 2: Oberflächenenergien der Probe-Muster nach Durchführung einer Niederdruck-Plasmaaktivierung**

| **Muster** | **Oberflächenenergien [mN/m]** | | |
|---|---|---|---|
| | **polar** | **dispers** | **gesamt** |
| Abdeckung-PES | 30,8 | 36,0 | 66,7 |
| Weich-PVC | 18,0 | 37,8 | 55,8 |
| Blech-KTL | 29,3 | 35,5 | 64,8 |
| Abdeckung-PC | 31,4 | 34,3 | 65,7 |

Sämtliche Oberflächenaktivierungen wurden auf einer Niederdruck-Plasma-Anlage des Typs "FEMTO" (Fa. DIENER) bei einem Prozessdruck von < 0.5 mbar mit Atmosphärenluft als Reaktionsgas durchgeführt. Die Leistungsdaten des Plasmagenerators betrugen 40 kHz, 100 W; Aktivierungsleistung 100 %.

### 3. chemisches Gasphasenabscheidungsverfahren

### 3.1 Erste Variante:

Zur Durchführung einer plasmaunterstützten chemischen Gasabscheidung wurde eine Niederdruck-Plasma-Anlage des Typs "TETRA 100" (40 kHz Plasmagenerator) verwendet (Niederdruck-Plasma-Verfahren bzw. ND-Plasma-Verfahren). Als Prozessgas wurde ein Fluormonomer eingesetzt. Die Behandlung wurde während eines Zeitraumes von 120 Minuten bei einem Druck von 0.09 mbar vorgenommen.

Dabei konnte die Oberflächenenergie bei sämtlichen Probe-Mustern um ein Vielfaches reduziert werden. Die entsprechenden Ergebnisse sind in untenstehender Tabelle 3 wiedergegeben. Durch die Beschichtung mittels chemischer Gasphasenabscheidung kam es im Übrigen bei keinem der Probe-Muster zu einer Veränderung der optischen Eigenschaften.

**Tabelle 3: Oberflächenenergien der Probe-Muster nach Durchführung eines Niederdruck-Plasma-Verfahrens**

| **Muster** | **Oberflächenenergien [mN/m]** | | |
|---|---|---|---|
| | **polar** | **dispers** | **gesamt** |
| Abdeckung-PES | 0,4 | 12,0 | 12,4 |
| Weich-PVC | 0,0 | 5,7 | 5,7 |
| Blech-KTL | 0,0 | 4,1 | 4,1 |
| Abdeckung-PC | 1,6 | 11,2 | 12,8 |

### 3.2 Zweite Variante:

Die unter 1. beschriebenen Probe-Muster wurden bei einem alternativen Ansatz mittels eines Geräts des Typs "V 6-G" (Fa. PINK) einer plasmagestützten chemischen Gasphasenabscheidung unterworfen (Vakuumpumpe vom Typ PFEIFFER Duo 10).

Der erste Behandlungsschritt war eine zweiminütige Reinigung der Oberfläche in einem Sauerstoff-Tetrafluormethan-Plasma (80:20; ca. 0.4 mbar). Die Beschichtung erfolgte in einem Hexafluorethanplasma bei einem Druck von ca. 0.4 mbar in fünf Schritten zu je 10 Minuten. Die Behandlungsschritte erfolgten jeweils bei einer Plasmaleistung von 150 W.

### Ergebnisse:

Die hierbei erhaltenen Ergebnisse sind in untenstehender Tabelle 4 gelistet.

**Tabelle 4: Oberflächenenergien der Probe-Muster nach Durchführung eines alternativen Niederdruck-Plasma-Verfahrens**

| **Muster** | **Oberflächenenergien [mN/m]** | | |
|---|---|---|---|
| | **polar** | **dispers** | **gesamt** |
| Abdeckung-PES | 0,5 | 8,5 | 9,0 |
| Weich-PVC | 0,5 | 8,3 | 8,8 |
| Blech-KTL | 0,2 | 9,9 | 10,1 |
| Abdeckung-PC | 38,9 | 5,4 | 44,3 |

Es konnte bei allen eingesetzten Probe-Mustern eine Reduzierung der Oberflächenenergie erzielt werden, wobei die Reduzierung der Oberflächenenergie im Falle von Abdeckung-PES, Weich-PVC und Blech-KTL fiel besonders signifikant ausfiel.

### 4. Nassverfahren

Alternativ zu den unter 3. beschriebenen chemischen Gasphasenabscheidungsverfahren wurden die unter 1. beschriebenen Proben-Muster in einem alternativen nicht erfindungsgemäßen Ansatz mittels des unter der Bezeichnung "Dynasilan Sivo Clear EC" kommerziell erhältlichen Silanprodukts der Fa. Evonik beschichtet.
Hierfür wurden die Probenoberflächen jeweils zunächst gereinigt (im gegenständlichen Fall mit Isopropanol). Auf die trockenen Oberflächen wurde anschließend jeweils das flüssige Produkt aufgeschüttet und die Flüssigkeit bei einer Umgebungstemperatur von 15 bis 25 °C für 30 bis 60 Sekunden einpoliert. Ein zurückbleibender Flüssigkeitsfilm wurde mit einem sauberen Papiertuch abgewischt, bis keine Rückstände mehr sichtbar waren. Abhängig von dem Probenmuster stellte sich der hydrophobe Effekt nach 5 bis 15 Minuten ein. Die entsprechenden Versuchsergebnisse (ohne vorangegangene Aktivierung) sind in untenstehender Tabelle 5 aufgeführt.

**Tabelle 5: Oberflächenenergien der Probe-Muster nach Durchführung einer Silanbeschichtung**

| **Muster** | **Oberflächenenergie [mN/m]** | | |
|---|---|---|---|
| | **polar** | **dispers** | **gesamt** |
| Abdeckung-PES | 0,4 | 13,5 | 13,8 |
| Weich-PVC | 0,3 | 11,5 | 11,9 |
| Blech-KTL | 0,1 | 18,2 | 18,3 |
| Abdeckung-PC | 0,8 | 35,9 | 36,6 |

Die aufgetragene Schicht war über physikalische Wechselwirkungen an das Grundmaterial angebunden (Physisorption). Die Haftfestigkeit der Silanschicht konnte durch eine vorangehende Aktivierung der Oberfläche der Probe-Muster erhöht werden.

Die untenstehende Tabelle 6 gibt die Ergebnisse für die Oberflächenenergie mit vorangegangener Niederdruck-Plasmaaktivierung nach Reinigung mit Isopropanol wieder.

**Tabelle 6: Oberflächenenergien der Probe-Muster mit vorheriger Niederdruck-Plasmaaktivierung**

| **Muster** | **Oberflächenenergie [mN/m]** | | |
|---|---|---|---|
| | **polar** | **dispers** | **gesamt** |
| Abdeckung-PES | 0,1 | 18,8 | 18,9 |
| Weich-PVC | 0,2 | 15,8 | 16,0 |
| Blech-KTL | 1,8 | 17,6 | 19,4 |
| Abdeckung-PC | 0,0 | 35,2 | 35,2 |

Auch im Falle der Silanbeschichtung trat optisch keine Veränderung der Probe-Muster auf. Die Oberflächenenergien konnten vor allem bei den Proben Abdeckung-PES, Weich-PVC und Blech-KTL besonders signifikant reduziert werden.

### 5. Bewitterungsversuche

Die beschichteten Probe-Muster wurden, um die Langzeitbeständigkeit zu testen, einer künstlichen Bewitterung unterworfen. Aufeinanderfolgend wurden die Proben den folgenden beiden, in den untenstehenden Tabellen 7 und 8 wiedergegebenen Bewitterungszyklen ausgesetzt:

**Tabelle 7: Bewitterungszyklus 1**

| **Klimalagerung mit Sonnensimulation (1000 W/m²)** | | | | |
|---|---|---|---|---|
| **Zyklus** | **Temperatur [°C]** | **Feuchte [%]** | **Zeit [h]** | **Wiederholung** |
| "1" | +40 | 90 | 12 | 10x |
| | -10 | - | 6 | |
| | 23 | 90 | 2 | |
| | +40 | 90 | 10 | |
| | +10 | 90 | 12 | |
| | -20 | - | 6 | |

Temperaturänderungsgeschwindigkeit: 1 °C/Minute (ist in den angegebenen Zeiten inbegriffen). Die Bestrahlung erfolgte mit Metallhalogenidstrahler (Leistung 1000 W/m²) entsprechend ISO 4892. Mit diesem Bewitterungszyklus wurde die Belastung durch zyklische Eisbildung an der Oberfläche simuliert.

**Tabelle 8: Bewitterungszyklus 2**

| **Klimalagerung mit zusätzlicher Wasserbelastung** | | | | | |
|---|---|---|---|---|---|
| **Zyklus** | **Temperatur [°C]** | **Feuchte [%]** | **Zeit [h]** | **Bestrahlung** | **Wiederholung** |
| "2" | 5 | 90 | 3 | ja | 10x |
| | -5 | - | 3 | ja | |
| | 5 | 90 | 3 | nein | |
| | -5 | - | 3 | nein | |

Temperaturänderungsgeschwindigkeit: 1 °C/Minute (ist in den angegebenen Zeiten inbegriffen). Die Proben wurden in Wasser gelagert. Die Bestrahlung erfolgte mit Metallhalogenidstrahler (Strahler 1000 W/m²) entsprechend ISO 4892.

Der Bewitterungszyklus 2 stellte eine Extremsituation nach. Die Proben wurden in Wasser gelagert und mit einem Metallhalogenidstrahler bei voller Leistung bestrahlt. Diese Art der Bestrahlung findet in der Automobilindustrie zur Überprüfung der Beständigkeit von Lackbeschichtungen Anwendung.

### Ergebnisse:

Die Oberflächenenergien wurden nach Beendigung des ersten Bewitterungszyklus und nach Beendigung des zweiten Bewitterungszyklus mittels Randwinkelmessungen bestimmt. Die Ergebnisse sind in der Tabelle 9 wiedergegeben.

**Tabelle 9: Oberflächenenergien der Probe-Muster nach Durchführung von Bewitterungszyklen**

| **1. Beurteilung** | | | | | | | | | | | | |
|---|---|---|---|---|---|---|---|---|---|---|---|---|
| **Muster** | **ND-Plasma-Verfahren** | **polar** | **dispers** | **gesamt** | **ND-Plasma-Verfahren** | **polar** | **dispers** | **gesamt** | **Verfahren** | **polar** | **dispers** | **gesamt** |
| Abdeckung-PES | **1. Variante** | 2,5 | 9,9 | 12,4 | **2. Variante** | 4,0 | 9,8 | 13,9 | **Nassbeschichtung** | 0,7 | 9,8 | 10,5 |
| Weich-PVC | | 0,2 | 6,7 | 6,9 | | 7,5 | 6,6 | 14,1 | | 12,3 | 14,4 | 26,7 |
| Blech-KTL | | 0,0 | 7,7 | 7,7 | | 0,5 | 10,1 | 10,5 | | 0,3 | 9,5 | 9,8 |
| Abdeckung-PC | | 0,5 | 14,7 | 15,1 | | 37,9 | 4,4 | 42,3 | | 0,5 | 29,0 | 29,4 |
| | | | | | | | | | | | | |

| **2. Beurteilung** | | | | | | | | | | | | |
|---|---|---|---|---|---|---|---|---|---|---|---|---|
| **Muster** | **ND-Plasma-Verfahren** | **polar** | **dispers** | **gesamt** | **Verfahren** | **polar** | **dispers** | **gesamt** | **Verfahren** | **polar** | **dispers** | **gesamt** |
| Abdeckung-PES | **1. Variante** | 3,7 | 19,2 | 22,9 | **2. Variante** | 11,8 | 28,2 | 40,0 | **Nassbeschichtung** | 0,2 | 21,9 | 22,1 |
| Weich-PVC | | 0,0 | 12,4 | 12,4 | | 0,6 | 21,2 | 21,8 | | 4,9 | 12,0 | 16,9 |
| Blech-KTL | | 1,0 | 9,0 | 10,0 | | 1,5 | 28,8 | 30,3 | | 4,8 | 17,1 | 21,9 |
| Abdeckung-PC | | 5,0 | 15,7 | 20,7 | | 35,4 | 3,8 | 39,2 | | 1,0 | 30,0 | 31,0 |

Zusammenfassend kann festgehalten werden, dass die Oberflächenenergien nach Durchlaufen des ersten Bewitterungszyklus im Wesentlichen nahe bei den Werten des Materials unmittelbar nach der Hydrophobierung lagen.

Der zweite Bewitterungszyklus bewirkte für sämtliche Beschichtungen zwar eine Erhöhung der Oberflächenenergien gegenüber der Initialhydrophobierung. Es kann jedoch festgehalten werden, dass trotz der simulierten Extrembelastung die Oberflächenenergien weit unterhalb der Ausgangswerte lagen.

### 6. Versuche zum Nachweis der Eisfreiheit

### 6.1 Verhalten von Wassertropfen an der Oberfläche

Die Wechselwirkungsstärke zwischen einer Oberfläche und Wasser kann am Verhalten eines Tropfens beobachtet werden. Die Oberflächenenergie eines unbeschichteten Blech-KTL-Musters lag bei etwa 30 mN/m. Die Wechselwirkung zwischen dem Wassertropfen und der Oberfläche des Musters war dementsprechend stark ausgeprägt, was sich in einem hohen Benetzungsgrad wiederspiegelte.

Dagegen betrug die Oberflächenenergie eines mittels chemischer Gasphasenabscheidung beschichteten Blech-KTL-Musters im gegenständlichen Fall ca. 4 mN/m. In diesem Fall wurde das Wasser von der Oberfläche des beschichteten Musters "abgestoßen". Es bildete sich ein Tropfen mit kleinem Radius.

### 6.2 Ablaufverhalten

Das unterschiedliche Benetzungsverhalten konnte auch im Rahmen von Ablaufversuchen von beschichteten und unbeschichteten Mustern verifiziert werden. Hierzu tauchte man beschichtete und unbeschichtete Muster in Wasser und beobachtete anschließend nach dem Herausziehen der Muster das Ablaufverhalten. Hierbei zeigte sich, dass bei den beschichteten Mustern, d.h. den Mustern mit niedrigerer Oberflächenenergie, das Wasser erkennbar schneller ablief als bei den unbeschichteten Mustern, d.h. bei den Mustern mit einer vergleichsweise höheren Oberflächenenergie.

### 6.3 Außenbewitterung

Beschichtete und unbeschichtete Muster wurden über Nacht an einem Außenbewitterungsstand gelagert. An sämtlichen Mustern war eine Eisbildung zu beobachten, wobei die Eisbildung bei den beschichteten Mustern deutlich geringer ausfiel. Die Eisschicht an den beschichteten Musterteilen konnte im Gegensatz zu den unbeschichteten Musterteilen zudem ohne großen Kraftaufwand mit einem Tuch abgewischt werden.

### 6.4 Haftabzugsversuche

An beschichteten und unbeschichteten Musterteilen wurden Haftabzugsprüfungen durchgeführt. Hierzu wurden Haftabzugsstempel in Wasser mittels Glaskugeln auf einen Abstand von 0.3 mm von der Oberfläche gehalten. Die Musterteile wurden anschließend bei unter 0 °C gelagert. Nach Bildung einer Eisschicht wurden die Stempel von den Oberflächen abgezogen. An den Mustern geringerer Oberflächenenergie konnte ein großflächigeres Ausbrechen des Eises beobachtet werden. Haftabzugswerte konnten nicht ermittelt werden, da ein Zuschneiden der Proben vor Abzug des Haftstempels die Beschichtungen angegriffen und somit die Werte verfälscht hätte.

## Patentansprüche

1. Hydrophobiertes Kraftfahrzeugbauteil für ein Pistenpflegefahrzeug, umfassend einen Kraftfahrzeugbauteilkörper und wenigstens eine hydrophobe Schicht, die die Oberfläche des Kraftfahrzeugbauteilkörpers wenigstens teilweise beschichtet, **dadurch gekennzeichnet, dass** die wenigstens eine hydrophobe Schicht mittels plasmaunterstützter chemischer Gasphasenabescheidung erzeugt ist und die wenigstens eine hydrophobe Schicht ein hydrophobes Polymer enthält oder aus einem solchen Polymer besteht, wobei es sich bei dem Polymer um ein aus den Elementen Kohlenstoff, Wasserstoff und Fluor oder ein aus den Elementen Kohlenstoff und Fluor zusammengesetztes Polymer handelt, und es sich bei dem Kraftfahrzeugbauteilkörper um ein Karosserieteil eines Pistenpflegefahrzeugs handelt.

2. Hydrophobiertes Kraftfahrzeugbauteil nach Anspruch 1, **dadurch gekennzeichnet, dass** die wenigstens eine hydrophobe Schicht mittels eines Niederdruck-Plasmas erzeugt ist.

3. Hydrophobiertes Kraftfahrzeugbauteil nach Anspruch 1 oder Anspruch 2, **dadurch gekennzeichnet, dass** die wenigstens eine hydrophobe Schicht mittels Plasmapolymerisation ausgehend von einem fluorhaltige Monomere enthaltenden Reaktivgas erzeugt ist, wobei die fluorhaltigen Monomere ausgewählt sind aus der Gruppe umfassend Fluorethan, 1,1-Difluorethan, 1,1,1-Trifluorethan, 1,1,1,2-Tetrafluorethan, Pentafluorethan, Hexafluorethan, Octafluorpropan, Tetrafluorethylen, Perfluorcyclopropan, Perfluorcyclobutan, Perfluorcyclopentan und Mischungen davon.

4. Hydrophobiertes Kraftfahrzeugbauteil nach einem der vorhergehenden Ansprüche, **dadurch gekennzeichnet, dass** der Kraftfahrzeugbauteilkörper aus einem Material gebildet ist, welches ausgewählt ist aus der Gruppe umfassend Polyester (PES), Polyvinylchlorid (PVC), Polycarbonate (PC), Polyurethane (PUR), Polymethylmethacrylat, Polypropylen, glasfaserverstärkte Kunststoffe, Polyesterharze, Epoxydharze, Metalle, mittels kathodischer Tauchlackierung beschichtete Bleche (KT-Bleche), epoxydharzbeschichtete Metalle bzw. Bleche und Kombinationen davon.

5. Hydrophobiertes Kraftfahrzeugbauteil nach einem der vorhergehenden Ansprüche, **dadurch gekennzeichnet, dass** es sich bei dem Pistenpflegefahrzeug um eine Pistenraupe handelt.

6. Hydrophobiertes Kraftfahrzeugbauteil nach einem der vorhergehenden Ansprüche, **dadurch gekennzeichnet, dass** es sich bei dem Karosserieteil um ein Verkleidungsteil handelt.

7. Hydrophobiertes Kraftfahrzeugbauteil nach Anspruch 6, **dadurch gekennzeichnet, dass** das Verkleidungsteil ausgewählt ist aus der Gruppe umfassend Frontmaske, Schneefräsenabdeckung, Überwurfschutz, Finisher und Fensterscheibe.

8. Pistenpflegefahrzeug, umfassend wenigstens ein Kraftfahrzeugbauteil nach einem der vorhergehenden Ansprüche.

## Claims

1. Hydrophobized motor vehicle component for a piste grooming vehicle, comprising
a motor vehicle component body and at least one hydrophobic layer which is an at least partial coating of the surface of the motor vehicle component body,
**characterized in that**
the at least one hydrophobic layer is produced using plasma-assisted chemical vapor deposition (PACVD), and the at least one hydrophobic layer includes a hydrophobic polymer or consists of such a polymer, wherein the polymer is a polymer composed of the elements carbon, hydrogen and fluorine, or a polymer composed of the elements carbon and fluorine, and the motor vehicle component body is a vehicle bodywork part of a piste grooming vehicle.

2. Hydrophobized motor vehicle component according to claim 1, **characterized in that** the at least one hydrophobic layer is produced using a low-pressure plasma.

3. Hydrophobized motor vehicle component according to claim 1 or claim 2, **characterized in that** the at least one hydrophobic layer is produced using plasma polymerization based on a reactive gas including fluoric monomers, wherein the fluoric monomers are selected from the group comprising fluoroethane, 1,1-difluoroethane, 1,1,1-trifluoroethane, 1,1,1,2-tetrafluoroethane, pentafluoroethane, hexafluoroethane, octafluoropropane, tetrafluoroethylene, perfluorocyclopropane, perfluorocyclobutane, perfluorocyclopentane, and mixtures thereof.

4. Hydrophobized motor vehicle component according to any of the preceding claims, **characterized in that** the motor vehicle component body is made of a material which is selected from the group comprising polyesters (PES), polyvinyl chloride (PVC), polycarbonates (PC), polyurethanes (PUR), polymethyl methacrylate, polypropylene, glass fiber-reinforced plastics, polyester resins, epoxide resins, metals, sheet metal coated by cathodic dip coating (CDP sheets), epoxide resin-coated metals or sheets, and combinations thereof.

5. Hydrophobized motor vehicle component according to any of the preceding claims, **characterized in that** the piste grooming vehicle is a tracked piste vehicle.

6. Hydrophobized motor vehicle component according to any of the preceding claims, **characterized in that** the vehicle bodywork part is a cladding part.

7. Hydrophobized motor vehicle component according to claim 6, **characterized in that** the cladding part is selected from the group comprising front fairing, snow cutter covering, protector unit, finisher, and window pane.

8. Piste grooming vehicle, comprising at least one motor vehicle component according to any of the preceding claims.

## Revendications

1. Composant de véhicule automobile hydrophobé pour un véhicule d'entretien des pistes, comprenant un corps de composant de véhicule automobile et au moins une couche hydrophobe recouvrant la surface du corps de composant de véhicule automobile au moins partiellement,
**caractérisé en ce que**
l'au moins une couche hydrophobe est produit au moyen de dépôt chimique en phase vapeur assisté par plasma (PECVD) et l'au moins une couche hydrophobe contient un polymère hydrophobe ou consiste d'un tel polymère, le polymère étant un polymère composé des éléments carbone, hydrogène et fluor, ou un polymère composé des éléments carbone et fluor, et le corps de composant de véhicule automobile étant une partie de carrosserie d'un véhicule d'entretien des pistes.

2. Composant de véhicule automobile hydrophobé selon la revendication 1, **caractérisé en ce que** l'au moins une couche hydrophobe est produit au moyen d'un plasma à basse pression.

3. Composant de véhicule automobile hydrophobé selon la revendication 1 ou la revendication 2, **caractérisé en ce que** l'au moins une couche hydrophobe est produit au moyen de polymérisation par plasma à partir d'un gaz réactif contenant des monomères fluorés, les monomères fluorés étant sélectionnés dans le groupe comprenant fluoroéthane, 1,1-difluoroéthane, 1,1,1-trifluoroéthane, 1,1,1,2-tetrafluoroéthane, pentafluoroéthane, hexafluoroéthane, octafluoropropane, tetrafluoroéthylène, perfluorocyclopropane, perfluorocyclobutane, perfluorocyclopentane et leurs mélanges.

4. Composant de véhicule automobile hydrophobé selon l'une quelconque des revendications précédentes, **caractérisé en ce que** le corps de composant de véhicule automobile est formé d'un matériau sélectionné dans le groupe comprenant polyesters (PES), chlorure de polyvinyle (PVC), polycarbonates (PC), polyuréthanes (PUR), poly(méthacrylate de méthyle), polypropylène, matières synthétiques renforcées de fibres de verre, résines de polyester, résines époxydiques, métaux, tôles recouvertes de revêtement par immersion cathodique, métaux ou tôles recouvertes de résines époxydiques et leurs combinaisons.

5. Composant de véhicule automobile hydrophobé selon l'une quelconque des revendications précédentes, **caractérisé en ce que** le véhicule d'entretien des pistes est une dameuse chenillée.

6. Composant de véhicule automobile hydrophobé selon l'une quelconque des revendications précédentes, **caractérisé en ce que** la partie de carrosserie est une partie de garniture.

7. Composant de véhicule automobile hydrophobé selon la revendication 6, **caractérisé en ce que** la partie de garniture est sélectionnée dans le groupe comprenant un carénage frontal, dispositif de couverture de la souffleuse, dispositif protecteur, dispositif finisseur et carreau de fenêtre.

8. Véhicule d'entretien des pistes, comprenant au moins un composant de véhicule automobile selon l'une quelconque des revendications précédentes.
